# FASCICULE DE BREVET EUROPEEN

(11) **EP 4 204 249 B1**
(45) Date de publication et mention de la délivrance du brevet: **06.05.2026**
(21) Numéro de dépôt: 21765945.7
(22) Date de dépôt: 26.08.2021
(51) Int. Cl.: B60L 7/14, B60L 7/18, B60L 15/20, B60T 7/00, B60T 1/10, B60T 7/04, B60T 7/12, B60T 13/58, B60W 30/00, F16D 61/00

(54) **PROCÉDÉ DE GESTION D'UN FREINAGE RÉGÉNÉRATIF D'UN VÉHICULE AUTOMOBILE**
VERWALTUNGSVERFAHREN ZUM REGENERATIVEN BREMSEN EINES FAHRZEUGS
MANAGEMENT METHOD FOR REGENERATIVE BRAKING OF A VEHICLE

(30) Priorité: 26.08.2020 FR 2008720
(43) Date de publication de la demande: 05.07.2023
(73) Titulaire: Ampere SAS, 92100 Boulogne-Billancourt (FR); NISSAN MOTOR CO., LTD., Kanagawa 221-0023 (JP)
(72) Inventeur: MARCHAUDON, Eric, 91510 LARDY France Sce 66637 - 91510 LARDY (FR); PLANTE, Francois, 78084 Guyancourt (FR)
(74) Mandataire: Renault Group
(86) Numéro de dépôt international: PCT/EP2021/073579
(87) Numéro de publication internationale: WO 2022/043418

(56) Documents cités:
- EP-A1- 0 754 588
- WO-A1-2020/028487
- CN-A- 104 249 738
- CN-A- 109 895 775
- DE-A1- 102011 081 724
- US-A1- 2010 076 657
- US-A1- 2015 019 058

## Description

### Domaine Technique de l'invention

L'invention concerne un procédé de gestion d'un freinage régénératif d'un véhicule automobile, notamment un véhicule automobile électrique, le véhicule comprenant un moteur électrique apte à fournir un couple résistif. L'invention porte aussi sur véhicule automobile comprenant des moyens matériels et/ou logiciel aptes à mettre en œuvre un tel procédé de gestion.

### Etat de la technique antérieure

Les véhicules automobiles dits "électriques" comprennent un groupe motopropulseur comprenant au moins un moteur électrique apte à entraîner les roues motrices du véhicule. Un tel moteur électrique peut être exploité comme un moteur, en transformant de l'énergie électrique en énergie mécanique, ou comme un générateur en transformant de l'énergie mécanique en énergie électrique. Le moteur peut donc exercer sur les roues motrices du véhicule soit un couple positif, ou autrement dit un couple moteur, soit un couple négatif ou autrement dit un couple résistif. La production d'un couple résistif est utile pour ralentir le véhicule lorsque cela est nécessaire mais également pour produire de l'énergie électrique utile pour recharger un dispositif de stockage du véhicule, notamment une batterie. Un tel couple résistif, ou frein moteur, est donc généralement appliqué automatiquement dès que le conducteur du véhicule relâche la pédale d'accélérateur.

Un couple résistif important peut être souhaitable pour optimiser la quantité d'énergie mécanique convertie en énergie électrique et ainsi améliorer l'autonomie du véhicule. De plus, contrairement aux moteurs thermiques, les moteurs électriques peuvent produire un couple résistif de même amplitude que le couple moteur le plus élevé. Il est donc potentiellement possible de convertir une grande quantité d'énergie mécanique en énergie électrique. Toutefois, il est plus difficile de maitriser l'allure du véhicule lorsque le couple résistif, ou autrement dit le couple de freinage régénératif, est important. Notamment, le véhicule peut décélérer plus fortement que ne le souhaiterait le conducteur ce qui l'oblige à ré-accélérer. L'allure du véhicule est alors saccadée. Le confort d'utilisation du véhicule est dégradé et il existe un risque de collision à l'avant ou à l'arrière du véhicule.

On connaît des véhicules comprenant un moyen de sélectionner un mode de conduite donné parmi un ensemble de modes disponibles. L'utilisateur peut ainsi choisir par exemple entre des modes de fonctionnement dits "Eco", "Confort", "Normal" ou "Sportif" et ainsi obtenir un frein moteur caractéristique du mode sélectionné. Toutefois, cette solution présente des inconvénients. Elle oblige le conducteur à vérifier constamment le mode sélectionné et à adapter sa conduite en fonction de ce mode. Un conducteur peut par exemple avoir sélectionné un mode permettant d'obtenir un couple résistif important car il était en train de descendre une longue côte, puis, ultérieurement alors qu'il roule sur une route horizontale, être surpris par le fort couple résistif du véhicule lorsqu'il relâche à nouveau la pédale d'accélérateur. En particulier, le document US20120143420 décrit l'utilisation de palettes disposées à proximité immédiate d'un volant, afin de faciliter le contrôle du mode régénératif de décélération. Mais même si l'ergonomie est améliorée, le conducteur doit encore constamment soit adapter le mode à sa conduite, soit adapter sa conduite au mode sélectionné. Le document US20100076657A1 EP 0 754 588 A1 et DE 10 2011 081724 A1 divulguent également un procédé analogue de gestion du freinage régénératif à plusieurs modes actionnés par un moyen de commande. Ils présentent des inconvénients similaires.

### Présentation de l'invention

Le but de l'invention est de fournir un procédé de gestion d'un freinage régénératif remédiant aux inconvénients ci-dessus et améliorant les procédés de gestion connus de l'art antérieur.

Plus précisément, un premier objet de l'invention est un procédé de gestion permettant un meilleur confort de conduite tout en optimisant la quantité d'énergie mécanique convertie en énergie électrique par le moteur d'un véhicule.

Un second objet de l'invention est un procédé de gestion simple et intuitif.

### Résumé de l'invention

L'invention est définie dans le jeu de revendications qui suit.

A cet effet, l'invention repose sur un procédé de gestion d'un freinage régénératif d'un véhicule automobile comprenant un moteur électrique apte à fournir un couple résistif, le couple résistif du moteur étant régi par une loi de freinage régénératif sélectionnable parmi au moins une première loi et une deuxième loi, le couple résistif associé à la deuxième loi étant strictement supérieur au couple résistif associé à la première loi, le procédé de gestion comprenant:
- une première étape de sélection manuelle ou automatique de la première loi,
- une deuxième étape de sélection manuelle ou automatique de la deuxième loi,
- une troisième étape de désélection automatique de la deuxième loi et de sélection automatique de la première loi si une condition sur la vitesse du véhicule et sur la position d'une pédale d'accélérateur du véhicule est respectée, ladite condition étant respectée si :- la vitesse du véhicule devient strictement inférieure à un premier seuil, puis- la vitesse du véhicule devient strictement supérieure à un deuxième seuil, la pédale d'accélérateur ayant été enfoncée au-delà d'un troisième seuil.

Le couple résistif du moteur régi par la deuxième loi de freinage régénératif peut être un couple résistif maximal du moteur.

Lors de la première étape et/ou lors de la deuxième étape, la loi de freinage régénératif peut être sélectionnée manuellement au moyen d'une interface de commande du véhicule, notamment au moyen d'une palette agencée autour d'un volant du véhicule.

Ladite condition peut être respectée si la pédale d'accélérateur est enfoncée au-delà d'un quatrième seuil pendant une durée supérieure ou égale à un cinquième seuil.

Le procédé peut comprendre une étape de sélection automatique de la première loi si :
- un levier de vitesse du véhicule est positionné en position de point mort ou en position de parking, et/ou si
- un système de contrôle de trajectoire du véhicule est activé.

Le couple résistif du moteur peut être appliqué selon la deuxième loi seulement si une position pied levé de la pédale d'accélérateur est détectée.

Le procédé de gestion peut en outre comprendre :
- une étape d'application d'un couple résistif selon la première loi de freinage régénératif
- une étape de détection d'un actionnement d'une interface de commande du véhicule, notamment une étape de détection d'un actionnement simultané de deux interfaces de commande distinctes du véhicule,
- une étape d'application d'un couple résistif selon la deuxième loi de freinage régénératif, tant que l'interface de commande est actionnée,
- une étape d'application d'un couple résistif selon la première loi (L1, L2, L3) de freinage régénératif, dès que l'interface de commande n'est plus actionnée.

Le procédé de gestion peut en outre comprendre :
- une étape d'application d'un couple résistif selon la première loi de freinage régénératif,
- une étape de transition au cours de laquelle le couple résistif du moteur passe progressivement d'un couple résistif selon la première loi à un couple résistif selon la deuxième loi,
- une étape d'application d'un couple résistif selon la deuxième loi de freinage régénératif,
ou peut comprendre :
- une étape d'application d'un couple résistif selon la deuxième loi de freinage régénératif,
- une étape de transition au cours de laquelle le couple résistif du moteur passe progressivement d'un couple résistif selon la deuxième loi à un couple résistif selon la première loi,
- une étape d'application d'un couple résistif selon la première loi de freinage régénératif.

L'invention porte aussi sur un véhicule automobile, caractérisé en ce qu'il comprend des moyens matériels et logiciels aptes à mettre en œuvre le procédé de gestion tel que décrit précédemment.

L'invention porte aussi sur un produit programme d'ordinateur comprenant des instructions de code de programme enregistrées sur un support lisible par ordinateur pour mettre en œuvre les étapes du procédé de gestion tel que décrit précédemment lorsque ledit programme fonctionne sur un ordinateur.

L'invention porte aussi sur un produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé de gestion tel que décrit précédemment.

L'invention porte aussi sur un support d'enregistrement de données, lisible par un ordinateur, sur lequel est enregistré un programme d'ordinateur comprenant des instructions de code de programme de mise en œuvre du procédé de gestion tel que décrit précédemment.

L'invention porte aussi sur un support d'enregistrement lisible par ordinateur comprenant des instructions qui, lorsqu'elles sont exécutées par un ordinateur, conduisent celui-ci à mettre en œuvre le procédé tel que décrit précédemment.

L'invention porte aussi sur un signal d'un support de données, portant le produit programme d'ordinateur tel que décrit ci-dessus.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un véhicule automobile selon un mode de réalisation de l'invention.
[Fig. 2] La figure 2 est une vue d'un poste de conduite du véhicule selon le point de vue d'un conducteur.
[Fig. 3] La figure 3 est un graphique illustrant différentes lois de freinage régénératif.
[Fig. 4] La figure 4 est schéma fonctionnel du procédé de gestion selon un mode de réalisation de l'invention.
[Fig. 5] La figure 5 est schéma illustrant une fonction particulière du procédé de gestion
[Fig. 6] La figure 6 est un schéma fonctionnel d'un mode de réalisation de ladite fonction particulière.

### Description détaillée

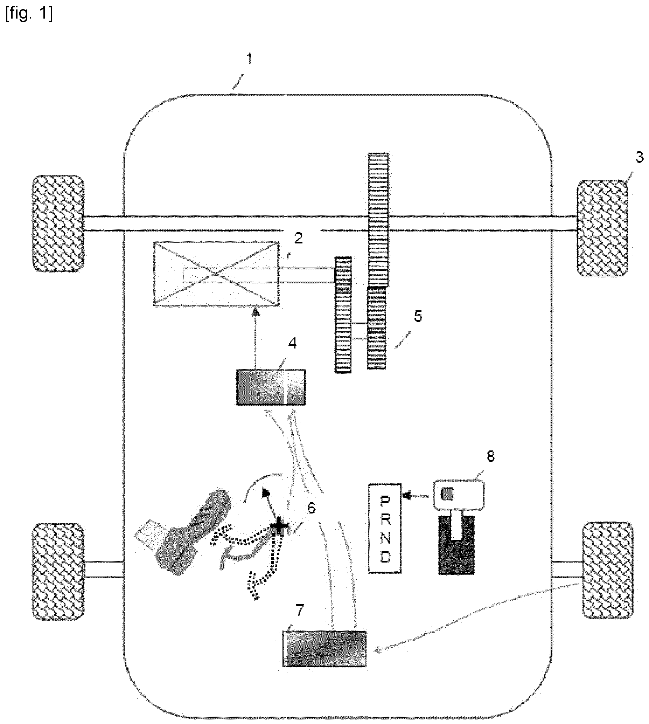

La figure 1 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 est équipé d'un groupe motopropulseur comprenant un moteur 2 électrique, des roues motrices 3, un contrôleur 4, un réducteur 5, une pédale d'accélérateur 6, une batterie 7 et un levier de vitesse 8.

Le moteur est relié à la batterie 7. La batterie 7 est un dispositif de stockage d'énergie, par exemple une batterie lithium-ion. Le moteur 2 est apte à fournir aux roues motrices 3 un couple moteur ou un couple résistif via le réducteur 5, ou boîte de vitesse, interposé entre le moteur 2 et les roues motrices 3. Par convention, le couple est dit "moteur" ou "positif" lorsque le moteur utilise de l'énergie électrique issue de la batterie 7 pour produire une énergie mécanique utile à faire avancer le véhicule. Le couple est dit "résistif" ou "négatif" lorsque le moteur utilise de l'énergie mécanique (notamment l'énergie cinétique du véhicule) pour produire une énergie électrique utile à recharger la batterie. Le couple résistif pourrait également être dénommé frein moteur.

La pédale d'accélérateur 6 est pourvue d'un capteur de position permettant de fournir un signal dépendant de la position de la pédale, c'est-à-dire de son niveau d'enfoncement. Ce capteur de position est relié au contrôleur 4. La pédale d'accélérateur est également équipée d'un moyen élastique permettant à la pédale de remonter automatiquement en position haute lorsqu'elle n'est plus sollicitée par le pied du conducteur. Le levier de vitesse 8 est également pourvu d'un capteur de position relié au contrôleur 4. Le levier de vitesse peut être manipulé entre les positions P (position de parking), R (marche arrière), N (neutre ou point mort) et D ("Drive" ou conduite).

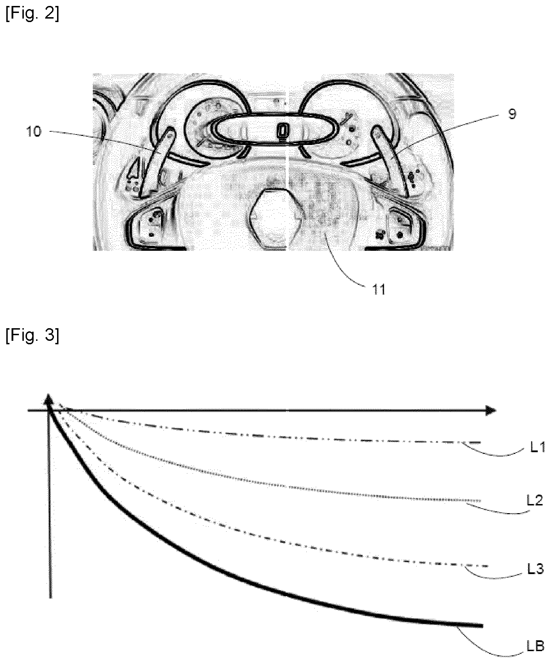

En référence à la figure 2, le véhicule 1 comprend également un poste de conduite. Le poste de conduite comprend deux interfaces de commandes 9, 10 agencées respectivement à droite et à gauche d'un volant 11 du véhicule. Les deux interfaces de commande peuvent se présenter par exemple sous la forme de palettes au volant, ou en variante sous la forme de boutons ou encore de molettes, de levier à impulsion, d'un écran tactile, voire même d'une interface apte à interpréter des ordres émis par parole. Les interfaces de commande peuvent être intégrées au volant ou à un commodo agencé autour du volant 11. En variante, elles pourraient être agencées sur la planche de bord à portée du conducteur du véhicule. Avantageusement, les deux interfaces de commande sont manipulables tout en conservant les mains en contact avec le volant 11. Notamment, le conducteur du véhicule peut maintenir le volant 11 dans le creux de ses deux mains et tirer vers lui sur chacune des interfaces de commande 9, 10 respectivement avec les doigts de sa main droite ou avec les doigts de sa main gauche. Ces interfaces de commandes sont reliées électriquement au contrôleur 4 de sorte que lorsque le conducteur actionne l'une ou l'autre de ces interfaces de commande, un ordre de commande est émis vers le contrôleur.

Le contrôleur 4, également dénommé unité de commande électronique, comprend un microprocesseur, une mémoire et des interfaces d'entrée sortie pour recevoir des signaux issus de la pédale d'accélérateur 6 et du levier de vitesse 8. Le contrôleur 4 est aussi relié directement ou indirectement à un capteur de vitesse du véhicule. Le contrôleur 4 est également relié au moteur 2. Il est apte à envoyer des ordres de commande au moteur 2 définissant un couple moteur ou résistif à appliquer par le moteur 2. La mémoire du contrôleur comprend des instructions de code d'un procédé de gestion selon un mode de réalisation de l'invention. Le procédé de gestion peut être exécuté par le processeur du contrôleur 4.

La mémoire du contrôleur 4 peut comprendre au moins deux lois de freinage régénératif distinctes. Une loi de freinage régénératif peut être une caractéristique définissant un couple C résistif à appliquer sur les roues motrices du véhicule en fonction de la vitesse V du véhicule. La loi de freinage régénératif est donc une loi qui caractérise la décélération du véhicule lorsque le moteur fonctionne comme un générateur de courant. Autrement dit, la loi de freinage régénératif est une loi de caractérisation du frein moteur. En comparaison avec le frein moteur d'un véhicule équipé d'un moteur thermique, le frein moteur généré par le moteur électrique peut être beaucoup plus important.

La figure 3 illustre quatre lois L1, L2, L3, LB distinctes. En ordonnée, on présente le couple C du moteur. S'agissant d'un couple résistif, celui-ci est donc négatif par convention. En abscisse, on représente la vitesse V du véhicule. Pour une loi de freinage régénératif donnée, plus la vitesse du véhicule est importante, plus le couple résistif est important. A vitesse nulle, le couple résistif est également nul. Pour toute valeur de vitesse du véhicule, le couple résistif du moteur associé à la loi L1 est plus faible que le couple résistif du moteur associé à la loi L2, lui-même plus faible que le couple résistif associé à la loi L3, lui-même plus faible que le couple résistif associé à la loi LB.

Le couple résistif du moteur associé à la loi de freinage régénératif LB peut être un couple résistif maximal du moteur. Pour chaque valeur de vitesse, le couple résistif associé à la loi LB peut donc correspondre au couple résistif maximal que le moteur est capable de fournir. Le couple maximal est limité par la puissance du moteur électrique. En variante, particulièrement si le moteur électrique est très puissant, le couple résistif associé à la loi LB pourrait correspondre à un pourcentage donné du couple résistif maximal que le moteur est capable de fournir, par exemple 95% ou 90%. Selon une autre variante, le couple résistif associé à la loi LB pourrait correspondre au couple résistif maximal que les roues motrices 3 peuvent transmettre au véhicule sans perte d'adhérence. Ce couple maximal peut être déterminé en fonction des pneumatiques utilisés et en fonctions des conditions d'adhérence de la route. Il pourrait être calculé par exemple par un système de contrôle de trajectoire de type ESP intégré au véhicule. Finalement le couple résistif associé à la loi de freinage régénératif LB peut être si important qu'il peut suffire à ralentir efficacement le véhicule comme si le conducteur appuyait normalement sur une pédale de frein. Un tel couple résistif permet donc de maximiser la quantité d'énergie cinétique du véhicule convertie en énergie électrique utile pour recharger la batterie 7.

Selon le mode de réalisation présenté la loi de freinage régénératif peut être sélectionnée parmi les quatre lois L1, L2, L3 ou LB. L'utilisateur peut utiliser les interfaces de commande 9, 10 afin de sélectionner une loi de freinage régénératif donnée. L'interface de commande 9 peut être par exemple utilisée pour incrémenter l'index de la loi de freinage régénératif depuis la loi L1 jusqu'à la loi L4. L'interface de commande 10 peut être par exemple utilisée pour décrémenter l'index de la loi de freinage régénératif depuis la loi L4 jusqu'à la loi L1. Afin de fiabiliser la sélection d'une loi de freinage régénératif donnée, on peut vérifier que les interfaces de commande sont actionnées pendant une durée minimale. En remarque, le nombre de lois de freinage disponibles pourrait être tout nombre supérieur ou égal à deux. La description de l'invention pourra aisément être transposée pour un nombre quelconque de loi de freinage régénératif en mémoire dans le contrôleur. Quel que soit ce nombre, la loi LB est celle qui produit le plus fort couple résistif.

Une loi de freinage régénératif sélectionnée peut être activée automatiquement dès que la pédale d'accélérateur n'est plus sollicitée. En variante, elle pourrait être appliquée dès que la pédale d'accélérateur remonte au-delà d'un seuil prédéterminé. Toutefois, la loi LB peut n'être appliquée que si une position pied levé de la pédale d'accélérateur est détectée, c'est-à-dire que le conducteur n'exerce aucune pression sur la pédale d'accélérateur.

Le procédé de gestion est mis en œuvre alors que le véhicule est en train de rouler sur une route. Dans une première étape E1 du procédé de gestion, le conducteur sélectionne une première loi de freinage régénératif parmi les lois L1, L2 ou L3. Autrement dit, il sélectionne toute loi de freinage régénératif disponible sauf la loi de freinage régénératif LB associée au couple résistif le plus élevé. Cette sélection peut être automatique. Par exemple, elle peut être une sélection par défaut définie en usine lors de la fabrication du véhicule. Elle peut aussi être une sélection par défaut définie par un utilisateur du véhicule dans un menu de configuration du véhicule. Cette sélection peut également être manuelle.

Notamment, le conducteur peut actionner l'une ou l'autre interface de commande 9, 10 de manière à sélectionner l'une des lois de freinage régénératif L1, L2 ou L3. La loi de freinage sélectionnée est mémorisée dans la mémoire du contrôleur 4. A chaque fois que le conducteur relève son pied de la pédale d'accélérateur, le moteur applique le couple résistif selon la loi de freinage régénératif sélectionnée. Selon un mode de réalisation, la première loi correspond à un couple résistif sensiblement nul.

Ultérieurement, dans une deuxième étape E2, l'utilisateur peut sélectionner la deuxième loi de freinage régénératif LB. Par exemple, le conducteur peut se trouver en haut d'une côte, d'une colline ou d'un col et s'apprêter à faire une longue descente. Il peut donc manipuler les interfaces de commande 9, 10 de sorte à sélectionner la loi LB. En variante, la loi LB pourrait également être sélectionnée automatiquement, par exemple si on détecte que le véhicule est en train d'effectuer une longue descente. Cette détection pourrait être basée par exemple sur de données de géolocalisation du véhicule. Elle pourrait aussi être basée sur la reconnaissance d'une utilisation intensive des freins du véhicule. Après avoir sélectionné la loi LB, le véhicule bénéficie pour cette longue descente d'un frein moteur puissant lui permettant à la fois de recharger efficacement la batterie 7 du véhicule 1 et d'économiser les freins du véhicule.

Dans une troisième étape E3, on sélectionne automatiquement la loi de freinage régénératif précédemment sélectionnée lors de la première étape E1. Cette sélection automatique est effectuée si une condition sur la vitesse du véhicule et/ou sur la position de la pédale d'accélérateur du véhicule est respectée. Par conséquent, lors de la troisième étape E3, on désélectionne automatiquement ou autrement dit on désactive automatiquement la loi de freinage génératif LB. Par "automatiquement", on comprend que cette étape est effectuée sans commande spécifique du conducteur. Notamment, le conducteur n'a pas besoin d'utiliser les interfaces de commande 9, 10 pour réactiver l'un des lois de freinage régénératif L1, L2, L3 préalablement sélectionnée. Suite à cette étape, lorsque le conducteur relâche complètement son pied de la pédale d'accélérateur, le frein moteur est plus modéré que lorsque la loi LB est sélectionnée, et l'allure du véhicule est plus simple à contrôler.

En remarque, la dernière loi de freinage régénératif sélectionnée peut être définie comme la loi parmi les lois L1, L2 ou L3 qui est restée sélectionnée pendant une durée suffisante. Ainsi, si l'utilisateur sélectionne la loi LB depuis la loi L1 en passant brièvement par les lois L2 et L3, c'est bien la loi L1 qui sera réactivée lors de la troisième étape E3.

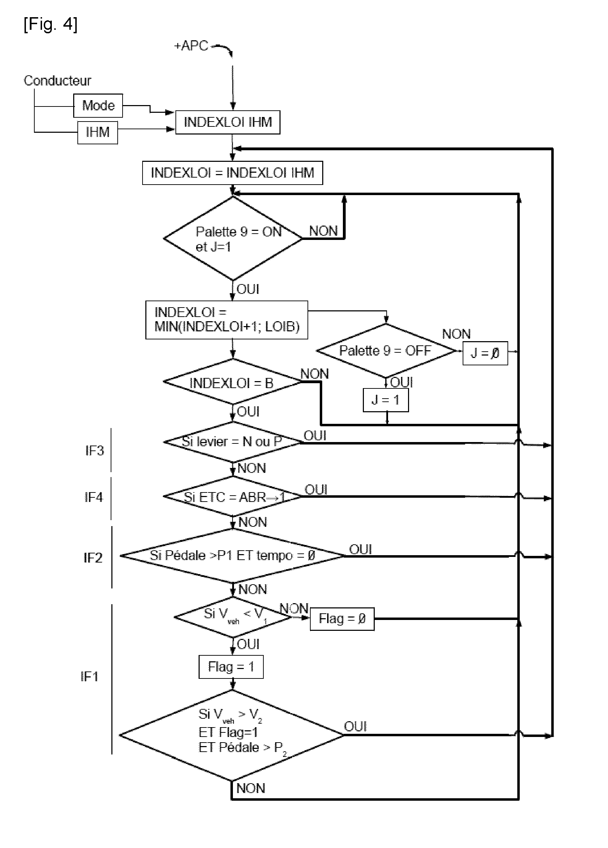

En référence au schéma fonctionnel de la figure 4, ladite condition peut être respectée si une ou plusieurs sous-conditions IF1, IF2, IF3, IF4 sont observées.

Une première sous-condition IF1 peut être considérée comme respectée si :
- la vitesse du véhicule Vveh devient strictement inférieure à un premier seuil V1, puis
- la vitesse du véhicule Vveh devient strictement supérieure à un deuxième seuil V2, la pédale d'accélérateur ayant été enfoncée au-delà d'un troisième seuil P2.

L'observation de cette sous-condition peut être interprétée comme le fait que le conducteur a terminé sa descente et/ou n'a plus besoin d'un frein moteur important. L'observation de l'enfoncement de la pédale d'accélérateur, en plus de l'observation des variations de vitesse, permet de s'assurer que les variations de vitesse ne sont pas simplement dues à des variations de pente au cours de la descente.

Une deuxième sous condition IF2 peut être considérée comme respectée si la pédale d'accélérateur est enfoncée au-delà d'un quatrième seuil P1 pendant une durée supérieure ou égale à un cinquième seuil. Ce cinquième seuil peut être défini grâce à une temporisation. L'observation de cette sous-condition peut être interprétée comme le fait que le conducteur a repris une conduite normale et n'a plus besoin d'un frein moteur important.

En remarques, les seuils V1, V2, P1, P2 peuvent être définis lors d'une phase de calibration du véhicule, en fonction d'un comportement souhaité. Les seuils V1, V2 s'expriment dans la même unité que la vitesse du véhicule. Les seuils P1, P2 représentent un positionnement de la pédale d'accélérateur.

Une troisième sous condition IF3 peut être considérée comme respectée si le levier de vitesse du véhicule est positionné en position de point mort, c'est-à-dire en position N ou en position de parking, c'est-à-dire en position P.

Une quatrième sous condition IF4 peut être considérée comme respectée si un système de contrôle de trajectoire du véhicule est activé.

Les deux conditions IF3 et IF4 sont donc indépendantes de la position de la pédale d'accélérateur et de la vitesse du véhicule. D'autre sous-conditions pourraient être proposées pour identifier des situations de conduite où il est préférable que le freinage résistif maximal ne soit pas appliqué. Avantageusement, chacune de ces sous-conditions IF1, IF2, IF3 et IF4 peut indépendamment des autres sous-conditions conduire à la désélection de la loi LP et à la réactivation de la loi précédemment sélectionnée.

Avantageusement, le procédé de gestion comprend une étape de transition permettant d'adapter progressivement le couple résistif lorsque le conducteur change de loi de freinage régénératif. Cette étape de transition, dont la durée peut être définie par paramétrage permet d'éviter toute variation brutale du couple résistif produit par le moteur. Ainsi, le confort des utilisateurs du véhicule peut être amélioré. En particulier, une telle étape de transition permet de garantir le confort de l'utilisateur lorsque la loi de freinage régénératif passe automatiquement de la loi LB à la loi L1.

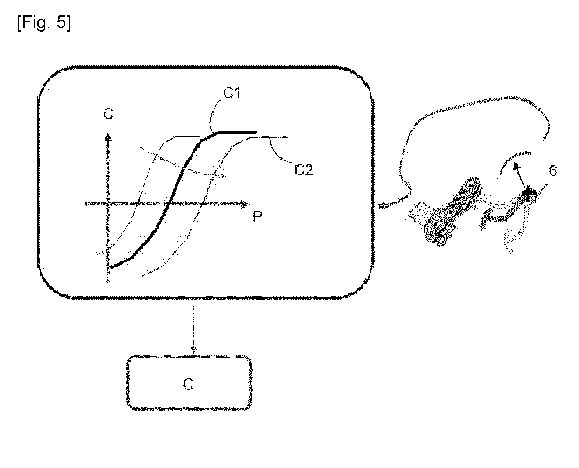

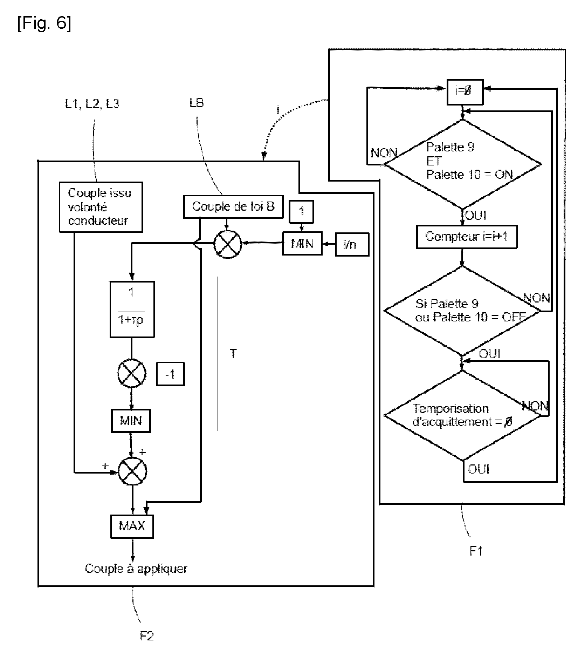

En référence aux figures 5 et 6, le procédé de gestion peut en outre comprendre une fonction d'augmentation temporaire du couple résistif produit par le moteur. Cette fonction peut par exemple comprendre les étapes E5, E6, E7, E8 suivantes.

Dans une cinquième étape E5, on applique un couple résistif selon une loi de freinage régénératif sélectionnée parmi les lois L1, L2 ou L3.

Dans une sixième étape E6, on détecte un actionnement simultané des deux interfaces de commande 9, 10 du véhicule. En remarque la détection de l'actionnement simultané de deux interfaces de commande permet de s'assurer que l'augmentation temporaire du couple résistif n'est pas accidentelle. On évite ainsi que qu'un frein moteur important soit activé non intentionnellement.

Dans une septième étape E7, on applique un couple résistif selon la loi de freinage régénératif LB, tant que les deux interfaces de commande 9, 10 du véhicule sont actionnées. Par exemple, lorsque les interfaces de commande sont des palettes au volant, on applique un couple résistif selon la loi de freinage régénératif LB, tant que les deux palettes sont tirées vers le conducteurs. Le frein moteur du véhicule est donc temporairement plus important.

Dans une huitième étape E8, on applique le couple résistif selon la même loi de freinage régénératif que lors de la cinquième étape E5, dès que les deux interfaces de commande 9, 10 ne sont plus actionnées simultanément. Par conséquent, dans la huitième étape E8 on désactive la loi de freinage régénératif LB.

En variante, le véhicule pourrait comprendre une unique interface de commande dédiée à l'activation de de la fonction d'augmentation temporaire du couple résistif produit par le moteur.

Cette fonction d'augmentation temporaire du couple résistif produit par le moteur peut être particulièrement utile lorsque le conducteur souhaite temporairement réduire l'allure du véhicule puis ré-accélérer, comme par exemple à l'approche d'un rond-point ou d'une intersection. Un frein moteur plus important peut donc être appliqué temporairement, tant que les deux interfaces de commande 9, 10 sont actionnées. Le conducteur peut donc décélérer puis ré-accélérer sans avoir à modifier la position de ses pieds. Autrement dit, il peut activer très facilement et rapidement la loi LB puis la désactiver également très facilement et rapidement. Cette fonction pourrait donc également être avantageusement implémentée dans un véhicule adapté pour une personne handicapée des jambes.

Le graphique illustré à la figure 5 représente le couple C fourni par le moteur en fonction de la position P de la pédale d'accélérateur 6. Plus la pédale d'accélérateur 6 est enfoncée, plus le couple C fourni par le moteur est important. En absence d'actionnement d'une interface de commande, le couple fourni par le moteur peut suivre une première courbe C1. Lorsqu'on détecte un actionnement de l'interface de commande, notamment un actionnement simultané des deux interfaces de commande 9, 10, le couple fourni par le moteur peut suivre une deuxième courbe C2. Sur le graphique de la figure 5, la deuxième courbe C2 est sensiblement obtenue par translation vers la droite de la première courbe C1. Le moteur réagit donc comme si la position de la pédale d'accélérateur avait été déplacée d'un offset donné vers le haut, c'est-à-dire dans le sens d'une moindre accélération. Cette offset sur la position de la pédale d'accélérateur n'est donc appliqué que pendant l'activation simultanée des interfaces de commande 9 et 10.

Le schéma fonctionnel de la figure 6 illustre un mode de réalisation particulier de la fonction d'augmentation temporaire du couple résistif produit par le moteur. Le schéma fonctionnel comprend le calcul de deux sous-fonctions F1 et F2. La sous-fonction F1 permet de calculer un compteur i qui est incrémenté à intervalle de temps régulier tant que les deux interfaces de commande 9 et 10 sont activées simultanément. Lorsque les deux interfaces de commandes 9, 10 ne sont plus actionnées simultanément le compteur i est réinitialisé à la valeur 0.

La deuxième sous-fonction F2 permet de calculer le couple résistif appliqué concrètement par le moteur. On dispose en entrée d'une part d'une loi de freinage régénératif sélectionnée par l'utilisateur parmi les lois L1, L2 ou L3, et d'autre part on dispose la loi de freinage régénératif LB. Le couple appliqué concrètement par le moteur est égal au couple maximum entre le couple résistif obtenu par la loi de freinage régénératif sélectionnée par l'utilisateur et le couple résistif issu de la loi LB multiplié par un coefficient égal au minimum entre la valeur 1 et la valeur i/M, (M étant un valeur fixe définie par paramétrage, i étant le compteur calculé par la sous-fonction F1). De plus, le calcul du couple résistif issu de la loi LB peut être filtré, notamment par un filtre T de type passe bas.

Grâce à l'invention on dispose d'un procédé de gestion permettant d'activer et de désactiver automatiquement une loi de freinage régénératif produisant un frein moteur maximal. L'utilisateur du véhicule peut donc se servir facilement de cette loi de freinage lorsqu'il en a la possibilité. Il recharge ainsi efficacement la batterie de son véhicule et économise ses freins. Cette loi de freinage est automatiquement désactivée de sorte que l'allure du véhicule reste facile à contrôler dans toutes les autres situations. Le conducteur n'est pas contraint à bien penser à désactiver lui-même la loi de freinage régénératif associée au plus grand couple résistif. Il peut donc se concentrer sur d'autres aspects de sa conduite.

## Revendications

1. Procédé de gestion d'un freinage régénératif d'un véhicule (1) automobile comprenant un moteur (2) électrique apte à fournir un couple résistif, le couple résistif du moteur étant régi par une loi (L1, L2, L3, LB) de freinage régénératif sélectionnable parmi au moins une première loi (L1, L2, L3) et une deuxième loi (LB), le couple résistif associé à la deuxième loi (LB) étant strictement supérieur au couple résistif associé à la première loi (L1, L2, L3), le procédé de gestion comprenant :
- une première étape (E1) de sélection manuelle ou automatique de la première loi (L1, L2, L3),
- une deuxième étape (E2) de sélection manuelle ou automatique de la deuxième loi (LB),
le procédé de gestion étant **caractérisé en ce que** :
- une troisième étape (E3) de désélection automatique de la deuxième loi (LB) et de sélection automatique de la première loi (L1, L2, L3) si une condition sur la vitesse du véhicule (1) et sur la position d'une pédale d'accélérateur (6) du véhicule est respectée, ladite condition étant respectée si :
- la vitesse (Vveh) du véhicule devient strictement inférieure à un premier seuil (V1), puis
- la vitesse du véhicule (Vveh) devient strictement supérieure à un deuxième seuil (V2), la pédale d'accélérateur ayant été enfoncée au-delà d'un troisième seuil (P2).

2. Procédé de gestion selon la revendication précédente, **caractérisé en ce que** le couple résistif du moteur régi par la deuxième loi (LB) de freinage régénératif est un couple résistif maximal du moteur (2).

3. Procédé de gestion selon l'une des revendications précédentes, **caractérisé en ce que**, lors de la première étape (E1) et/ou lors de la deuxième étape (E2), la loi de freinage régénératif est sélectionnée manuellement au moyen d'une interface de commande (9, 10) du véhicule, notamment au moyen d'une palette agencée autour d'un volant (11) du véhicule.

4. Procédé de gestion selon l'une des revendications précédentes, **caractérisé en ce qu'**il comprend :
- une étape d'application d'un couple résistif selon la première loi (L1, L2, L3) de freinage régénératif
- une étape de détection d'un actionnement d'une interface de commande (9, 10) du véhicule, notamment une étape de détection d'un actionnement simultané de deux interfaces de commande (9, 10) distinctes du véhicule,
- une étape d'application d'un couple résistif selon la deuxième loi (LB) de freinage régénératif, tant que l'interface de commande est actionnée,
- une étape d'application d'un couple résistif selon la première loi (L1, L2, L3) de freinage régénératif, dès que l'interface de commande n'est plus actionnée.

5. Procédé de gestion selon l'une des revendications précédentes, **caractérisé en ce qu'**il comprend :
- une étape d'application d'un couple résistif selon la première loi (L1, L2, L3) de freinage régénératif,
- une étape de transition au cours de laquelle le couple résistif du moteur passe progressivement d'un couple résistif selon la première loi à un couple résistif selon la deuxième loi (LB),
- une étape d'application d'un couple résistif selon la deuxième loi de freinage régénératif,
ou **en ce qu'**il comprend :
- une étape d'application d'un couple résistif selon la deuxième loi (LB) de freinage régénératif,
- une étape de transition au cours de laquelle le couple résistif du moteur passe progressivement d'un couple résistif selon la deuxième loi à un couple résistif selon la première loi (L1, L2, L3),
- une étape d'application d'un couple résistif selon la première loi de freinage régénératif.

6. Véhicule (1) automobile, **caractérisé en ce qu'**il comprend des moyens matériels (4) et logiciels aptes à mettre en œuvre le procédé de gestion selon l'une des revendications précédentes.

7. Produit programme d'ordinateur comprenant des instructions de code de programme enregistrées sur un support lisible par ordinateur pour mettre en œuvre les étapes du procédé de gestion selon l'une quelconque des revendications 1 à 5 lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé selon l'une quelconque des revendications 1 à 5.

8. Support d'enregistrement de données, lisible par un ordinateur, sur lequel est enregistré un programme d'ordinateur comprenant des instructions de code de programme de mise en œuvre du procédé de gestion selon l'une des revendications 1 à 5 ou support d'enregistrement lisible par ordinateur comprenant des instructions qui, lorsqu'elles sont exécutées par un ordinateur, conduisent celui-ci à mettre en œuvre le procédé selon l'une quelconque des revendications 1 à 5.

9. Signal d'un support de données, portant le produit programme d'ordinateur selon la revendication 7.

## Patentansprüche

1. Verfahren zur Verwaltung einer regenerativen Bremsung eines Kraftfahrzeugs (1), das einen Elektromotor (2) umfasst, der in der Lage ist, ein Widerstandsmoment bereitzustellen, wobei das Widerstandsmoment des Motors durch ein Gesetz (L1, L2, L3, LB) für die regenerative Bremsung geregelt wird, das aus mindestens einem ersten Gesetz (L1, L2, L3) und einem zweiten Gesetz (LB) auswählbar ist, wobei das dem zweiten Gesetz (LB) zugeordnete Widerstandsmoment strikt größer ist als das dem ersten Gesetz (L1, L2, L3) zugeordnete Widerstandsmoment, wobei das Verfahren zur Verwaltung umfasst:
- einen ersten Schritt (E1) des manuellen oder automatischen Auswählens des ersten Gesetzes (L1, L2, L3),
- einem zweiten Schritt (E2) des manuellen oder automatischen Auswählens des zweiten Gesetzes (LB), wobei das Verfahren zur Verwaltung **gekennzeichnet ist durch**:
- einen dritten Schritt (E3) des automatischen Abwählens des zweiten Gesetzes (LB) und des automatischen Auswählens des ersten Gesetzes (L1, L2, L3), wenn eine Bedingung hinsichtlich der Geschwindigkeit des Fahrzeugs (1) und der Stellung eines Gaspedals (6) des Fahrzeugs erfüllt ist, wobei die Bedingung erfüllt ist, wenn:
- die Geschwindigkeit (Vveh) des Fahrzeugs strikt kleiner als ein erster Schwellenwert (V1) wird, dann
- die Geschwindigkeit des Fahrzeugs (Vveh) strikt größer als ein zweiter Schwellenwert (V2) wird, nachdem das Gaspedal über einen dritten Schwellenwert (P2) hinaus niedergetreten wurde.

2. Verfahren zur Verwaltung nach dem vorhergehenden Anspruch, **dadurch gekennzeichnet, dass** das Widerstandsmoment des Motors, das durch das zweite Gesetz (LB) für die regenerative Bremsung geregelt wird, ein maximales Widerstandsmoment des Motors (2) ist.

3. Verfahren zur Verwaltung nach einem der vorhergehenden Ansprüche, **dadurch gekennzeichnet, dass** bei dem ersten Schritt (E1) und/oder bei dem zweiten Schritt (E2) das Gesetz für die regenerative Bremsung manuell über eine Steuerschnittstelle (9, 10) des Fahrzeugs ausgewählt wird, insbesondere über eine Schaltwippe, die um ein Lenkrad (11) des Fahrzeugs angeordnet ist.

4. Verfahren zur Verwaltung nach einem der vorhergehenden Ansprüche, **dadurch gekennzeichnet, dass** es umfasst:
- einen Schritt des Anwendens eines Widerstandsmoments gemäß dem ersten Gesetz (L1, L2, L3) für die regenerative Bremsung
- einen Schritt des Detektierens einer Betätigung einer Steuerschnittstelle (9, 10) des Fahrzeugs, insbesondere einen Schritt des Detektierens einer gleichzeitigen Betätigung von zwei verschiedenen Steuerschnittstellen (9, 10) des Fahrzeugs,
- einen Schritt des Anwendens eines Widerstandsmoments gemäß dem zweiten Gesetz (LB) für die generative Bremsung, solange die Steuerschnittstelle betätigt wird,
- einen Schritt des Anwendens eines Widerstandsmoments gemäß dem ersten Gesetz (L1, L2, L3) für die regenerative Bremsung, sobald die Steuerschnittstelle nicht mehr betätigt wird.

5. Verfahren zur Verwaltung nach einem der vorhergehenden Ansprüche, **dadurch gekennzeichnet, dass** es umfasst:
- einen Schritt des Anwendens eines Widerstandsmoments gemäß dem ersten Gesetz (L1, L2, L3) für die regenerative Bremsung,
- einen Übergangsschritt, in dessen Verlauf das Widerstandsmoment des Motors allmählich von einem Widerstandsmoment gemäß dem ersten Gesetz zu einem Widerstandsmoment gemäß dem zweiten Gesetz (LB) übergeht,
- einen Schritt des Anwendens eines Widerstandsmoments gemäß dem zweiten Gesetz für die regenerative Bremsung,
oder dadurch, dass es umfasst:
- einen Schritt des Anwendens eines Widerstandsmoments gemäß dem zweiten Gesetz (LB) für die regenerative Bremsung,
- einen Übergangsschritt, in dessen Verlauf das Widerstandsmoment des Motors allmählich von einem Widerstandsmoment gemäß dem zweiten Gesetz zu einem Widerstandsmoment gemäß dem ersten Gesetz (L1, L2, L3) übergeht,
- einen Schritt des Anwendens eines Widerstandsmoments gemäß dem ersten Gesetz für die regenerative Bremsung.

6. Kraftfahrzeug (1), **dadurch gekennzeichnet, dass** es Hardwaremittel (4) und Softwaremittel umfasst, die in der Lage sind, das Verfahren zur Verwaltung nach einem der vorhergehenden Ansprüche durchzuführen.

7. Computerprogrammprodukt, das Programmcodeanweisungen umfasst, die auf einem computerlesbaren Medium gespeichert sind, um die Schritte des Verfahrens zur Verwaltung nach einem der Ansprüche 1 bis 5 durchzuführen, wenn das Programm auf einem Computer läuft, oder Computerprogrammprodukt, das aus einem Kommunikationsnetz herunterladbar ist und/oder auf einem computerlesbaren Datenmedium gespeichert ist und/oder durch einen Computer ausführbar ist, **dadurch gekennzeichnet, dass** es Anweisungen beinhaltet, die bei der Ausführung des Programms durch den Computer diesen dazu veranlassen, das Verfahren nach einem der Ansprüche 1 bis 5 durchzuführen.

8. Computerlesbares Datenspeichermedium, auf dem ein Computerprogramm gespeichert ist, das Programmcodeanweisungen zur Durchführung des Verfahrens zur Verwaltung nach einem der Ansprüche 1 bis 5 umfasst, oder computerlesbares Speichermedium, das Anweisungen umfasst, die bei ihrer Ausführung durch einen Computer diesen dazu veranlassen, das Verfahren nach einem der Ansprüche 1 bis 5 durchzuführen.

9. Signal eines Datenmediums, welches das Computerprogrammprodukt nach Anspruch 7 trägt.

## Claims

1. Method for managing regenerative braking of a motor vehicle (1) comprising an electric motor (2) able to supply a resistive torque, the resistive torque of the motor being governed by a regenerative braking law (L1, L2, L3, LB) that can be selected from among at least one first law (L1, L2, L3) and a second law (LB), the resistive torque associated with the second law (LB) being strictly greater than the resistive torque associated with the first law (L1, L2, L3), the management method comprising:
- a first step (E1) of manually or automatically selecting the first law (L1, L2, L3),
- a second step (E2) of manually or automatically selecting the second law (LB),
the management method being **characterized in that**:
- a third step (E3) of automatically deselecting the second law (LB) and automatically selecting the first law (L1, L2, L3) if a condition relating to the speed of the vehicle (1) and relating to the position of an accelerator pedal (6) of the vehicle is met, said condition being met if:
- the speed of the vehicle (Vveh) becomes strictly less than a first threshold (V1), and then
- the speed of the vehicle (Vveh) becomes strictly greater than a second threshold (V2), the accelerator pedal having been pressed beyond a third threshold (P2).

2. Management method according to the preceding claim, **characterized in that** the resistive torque of the motor governed by the second regenerative braking law (LB) is a maximum resistive torque of the motor (2).

3. Management method according to either of the preceding claims, **characterized in that**, during the first step (E1) and/or during the second step (E2), the regenerative braking law is manually selected by means of a control interface (9, 10) of the vehicle, notably by means of a pad arranged around a steering wheel (11) of the vehicle.

4. Management method according to one of the preceding claims, **characterized in that** it comprises:
- a step of applying a resistive torque in accordance with the first regenerative braking law (L1, L2, L3),
- a step of detecting actuation of a control interface (9, 10) of the vehicle, notably a step of detecting simultaneous actuation of two separate control interfaces (9, 10) of the vehicle,
- a step of applying a resistive torque in accordance with the second regenerative braking law (LB) as long as the control interface is actuated,
- a step of applying a resistive torque in accordance with the first regenerative braking law (L1, L2, L3), provided that the control interface is not actuated.

5. Management method according to one of the preceding claims, **characterized in that** it comprises:
- a step of applying a resistive torque in accordance with the first regenerative braking law (L1, L2, L3),
- a changing-over step, during which the resistive torque of the motor changes gradually from a resistive torque in accordance with the first law to a resistive torque in accordance with the second law (LB),
- a step of applying a resistive torque in accordance with the second regenerative braking law,
or **in that** it comprises:
- a step of applying a resistive torque in accordance with the second regenerative braking law (LB),
- a changing-over step, during which the resistive torque of the motor changes gradually from a resistive torque in accordance with the second law to a resistive torque in accordance with the first law (L1, L2, L3),
- a step of applying a resistive torque in accordance with the first regenerative braking law.

6. Motor vehicle (1), **characterized in that** it comprises hardware means (4) and software means able to implement the management method according to one of the preceding claims.

7. Computer program product comprising program code instructions stored on a computer-readable medium for implementing the steps of the management method according to any one of Claims 1 to 5 when said program is run on a computer, or computer program product that is downloadable from a communication network and/or stored on a computer-readable and/or computer-executable data medium, **characterized in that** it comprises instructions that, when the program is executed by the computer, prompt said computer to implement the method according to any one of Claims 1 to 5.

8. Computer-readable data storage medium on which is stored a computer program comprising program code instructions for implementing the management method according to one of Claims 1 to 5, or computer-readable storage medium comprising instructions that, when they are executed by a computer, prompt said computer to implement the method according to any one of Claims 1 to 5.

9. Signal from a data medium, carrying the computer program product according to Claim 7.
